# DEMANDE DE BREVET EUROPEEN

(11) **EP 1 191 729 A1**
(43) Date de publication de la demande: **27.03.2002**
(21) Numéro de dépôt: 01402382.4
(22) Date de dépôt: 17.09.2001
(51) Int. Cl.: H04J 14/02, H04B 1/74, H04L 12/24

(54) **Procédé de gestion de ressources de protection et réseau de communication mettant en oeuvre ce procédé**

(30) Priorité: 21.09.2000 FR 0012045
(71) Demandeur: ALCATEL, 75008 Paris (FR)
(72) Inventeur: Collin, Nirisoa, 92260 Fontenay aux Roses (FR); Coujoulou, Philippe, 91300 Massy (FR); Pizzo, Alain, 94110 Arcueil (FR)
(74) Mandataire: Sciaux, Edmond

(57) **Abrégé**

La présente invention a pour objet un procédé de gestion de ressources de protection dans un réseau de communication, permettant l'attribution de ressources de protection à des ressources actives et comprenant en particulier une étape d'établissement d'un modèle d'information ou d'organisation des ressources, composé de sélecteurs ou groupes de protection contrôlant la commutation entre ressources actives et ressources de protection.

Procédé caractérisé en ce que le modèle d'information ou d'organisation comporte des groupes comprenant ou utilisant des ressources de protection associées à une direction de flux spécifique.

## Description

La présente invention concerne le domaine des télécommunications, notamment des réseaux de transmission WDM (pour "Wavelength Division Multiplexing", multiplexage optique par répartition de longueurs d'onde), et plus particulièrement la gestion des ressources de communication en fonction des critères de fiabilité et de qualité de services escomptés.

La présente invention a pour objet un procédé de gestion des ressources de protection présentant une grande flexibilité et entraînant une meilleure fiabilité des transmissions.

Dans les réseaux de communication, les ressources de communication, à savoir les équipements, les multiplexeurs, les canaux de communication et les connexions, ainsi que d'éventuels autres moyens ou éléments de transmission, de traitement ou analogues impliqués dans les communications, sont dupliqués pour éviter les interruptions de communication en cas de panne, de dysfonctionnement ou de fonctionnement dégradé.

La duplication correspond à un concept de protection. Ainsi, dans un réseau protégé, il y a des ressources que l'on qualifiera de ressources actives (c'est-à-dire des ressources prévues pour le fonctionnement normal du réseau) utilisé pour acheminer le trafic normal. Il y a également des ressources, dites ressources de protection, qui sont prévues pour remplacer les ressources actives en cas de panne de ces dernières et qui ne sont pas sollicitées en fonctionnement normal.

La gestion des ressources de protection consiste à gérer l'attribution des ressources de protection à des ressources actives.

Cela signifie qu'à partir d'une station de travail, un opérateur de télécommunication peut décider d'assigner une ressource de protection à une ressource active plutôt qu'à une autre.

Il existe actuellement plusieurs mécanismes de protection, fonction notamment du niveau de protection souhaité et des ressources de protection disponibles.

Selon un premier mécanisme, il est possible de protéger des ressources actives en prévoyant une ressource de protection dédiée à chaque ressource active (c'est le mécanisme de protection dénommé 1 + 1 ou 1 pour 1).

Selon un autre mécanisme, il est possible de protéger les ressources actives avec affectation de plusieurs ressources de protection à chaque ressource active (c'est le mécanisme de protection dénommé M pour 1).

Il est également possible de protéger plusieurs ressources actives avec une ressource de protection commune (c'est le mécanisme dénommé 1 pour N).

Enfin, il est également possible de protéger plusieurs ressources actives avec plusieurs ressources de protection (c'est le mécanisme dénommé M pour N).

Pour pouvoir être exploitable par un système de gestion des éléments du réseau de télécommunication, un mécanisme de protection des ressources doit être modélisé par un modèle d'information ou d'organisation.

La modélisation consiste à définir l'information reflétant la configuration de la protection. L'information demandée doit permettre à l'utilisateur (au système de gestion) de connaître quelles sont les ressources de protection, quelles sont les ressources actives, et quelle est l'attribution des ressources de protection auxdites ressources actives.

De plus, le modèle d'information ou d'organisation proposé doit permettre de changer la configuration de la protection en procédant simplement à un changement des données dudit modèle. Une fois qu'un modèle d'information a été proposé, il est possible d'implémenter le mécanisme de protection et de fournir des capacités de gestion à l'opérateur.

Quelques-uns uns des modèles de protection cités ci-dessus ont été modélisés et ont déjà été implémentés.

C'est le cas du modèle de protection 1+1 dans lequel une ressource active peut être protégée par une ressource de protection ou du modèle de protection M pour 1 dans lequel une ressource active est protégée par plusieurs ressources de protection.

Les modèles de protection 1 pour 1 et M pour 1 ont été modélisés et standardisés par les recommandations de l'ITU-G774-3 et G774-4.

Comme l'indiquent ces dernières, les mécanismes de protection 1 pour 1 et M pour 1 sont basés sur l'utilisation d'un sélecteur appartenant à un groupe de protection, qui permet de commuter d'une ressource active vers une ressource de protection lorsqu'un défaut est détecté sur la ressource active.

A chaque instant, une ressource de protection est attribuée à une ressource active, le sélecteur correspondant est inséré dans la base de données des informations de gestion.

Dans la recommandation G774-3, les sélecteurs sont dénommés groupes de protection et dans la recommandation G774-4, les sélecteurs sont appelés groupe de protection de connexion.

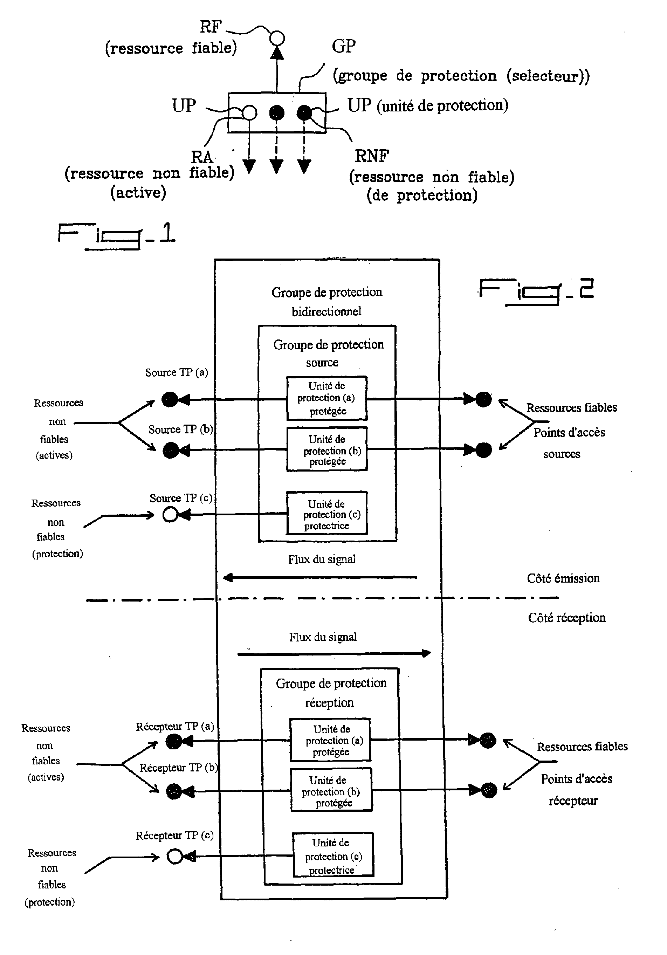

Toutefois le même principe est appliqué pour tous ces modèles d'informations existantes et la figure 1 des dessins annexés représente le schéma logique d'un modèle d'information d'un mécanisme de protection selon ce principe.

L'idée de base de cet état de la technique est d'avoir un sélecteur, comme on peut le voir sur la figure 1, qui supporte une ressource active représentée par un point blanc de la figure 1 et une ou plusieurs ressources de protection représentées par des points noirs, sur la figure 1, qui sont attribuées à ladite ressource active. Les différents points sont des points de connexion référencés PC.

Côté émission, lorsque la ressource active tombe en panne, le sélecteur commute automatiquement sur la ressource de protection prioritaire qu'il contient pour envoyer le trafic.

Côté réception, lorsqu'une ressource active tombe en panne, le sélecteur commute automatiquement sur la ressource de protection prioritaire qu'il contient pour recevoir le trafic entrant. Ainsi, le trafic est toujours acheminé à travers le réseau, mais par un autre chemin.

Par ailleurs, on connaît par la demande de brevet français n° 2 788 651 au nom de la demanderesse, un procédé de gestion de ressources de protection applicable aux modèles de protection dans lesquels les ressources de protection sont partagées (M pour N ou 1 pour N)

De plus, un schéma de protection du type M pour N est décrit et modélisé dans la recommandation ITU -T G 774-3.

A partir de l'état de la technique tel qu'exposé ci-dessus, le problème posé à la présente invention consiste à augmenter la fiabilité des transmissions, ce tout en optimisant l'utilisation des ressources de protection.

En effet, les modèles existants, et notamment la recommandation G 774-3 précitée, spécifient des commutations de protection bidirectionnelles lorsque le trafic est bidirectionnel. Ainsi, toutes les actions, les attributs et les propriétés des entités et unités de protection sont de nature bidirectionnelle lorsque les objets contenus sont bidirectionnels.

Par conséquent, il n'est pas possible dans le cadre des modèles précités de :
- réaliser une commutation de protection unidirectionnelle lorsque le trafic est bidirectionnel ;
- réaliser une combinaison de commutations unidirectionnelle(s) et bidirectionnelle(s) [par exemple, une commutation forcée unidirectionnelle sur une entité de protection et une commutation de verrouillage bidirectionnelle sur une autre entité de protection] ;
- imposer des valeurs d'attributions différentes sur une ou sur les deux directions de trafic (par exemple, un état administratif verrouillé bidirectionnel pour le groupe de protection et un mode de protection réversible unidirectionnel).

La présente invention a également pour but de proposer un procédé de gestion des ressources de protection permettant de surmonter au moins certaines des limitations précitées.

A cet effet, la présente invention a pour objet un procédé de gestion de ressources de protection dans un réseau de communication, permettant l'attribution de ressources de protection à des ressources actives et comprenant en particulier une étape d'établissement d'un modèle d'information ou d'organisation des ressources, composé de sélecteurs ou groupes de protection contrôlant la commutation entre ressources actives et ressources de protection au moyen de bornes de connexion ou terminales. Conformément à l'invention, ce modèle d'information ou d'organisation comporte des groupes comprenant ou utilisant des ressources de protection associées à une direction de flux spécifique.

Par ces dispositions, il est possible de rendre les deux directions de commutations indépendantes l'une de l'autre en cas de trafic bidirectionnel, et en particulier dans le cas d'une protection du type M pour N, de manière à éviter l'utilisation de ressources de protection lorsque ces dernières ne sont pas nécessitées.

Ces dispositions permettent également la maintenance et la réparation sur une direction de trafic sans déranger ou couper le trafic dans la direction opposée.

Selon une première caractéristique de l'invention, le modèle d'information ou d'organisation comprend avantageusement un groupe de protection unidirectionnel dédié au côté réception et un groupe de protection unidirectionnel dédié au côté émission, chacun desdits groupes de protection dédiés mettant en oeuvre des ressources de protection différenciées en commandant leurs utilisations de manière mutuellement indépendante.

Les deux groupes de protection unidirectionnels peuvent présenter chacun des caractéristiques et une configuration de commutations spécifiques et distinctes, toutes les bornes de connexion ou terminales du groupe de protection dédié au côté réception étant réceptrices et toutes les bornes de connexion ou terminales du groupe de protection dédié au côté émission étant émettrices.

Malgré l'indépendance des deux groupes de protection précités et leurs mises en oeuvre séparées, certains paramètres ou certaines actions peuvent être réalisées simultanément ou de manière commune pour les deux directions de trafic par lesdits deux groupes.

Conformément à un mode de réalisation préférentiel, il est prévu selon le procédé de gestion objet de l'invention, en cas de trafic bidirectionnel, que le modèle d'information ou d'organisation soit composé d'un groupe de protection unidirectionnel pour le côté réception, d'un groupe de protection unidirectionnel pour le côté émission ou source et d'un groupe de protection bidirectionnel comprenant les deux groupes de protection unidirectionnels précités.

Ainsi, le principe à la base de la présente invention consiste à créer des groupes de protection pourvus d'attributs de direction de trafic spécifiques qui leurs sont associés et qui permettent d'obtenir une séparation des actions de protection dans chaque direction de flux de transmission. Lorsqu'un trafic bidirectionnel existe, l'invention prévoit un groupe de protection unidirectionnel par direction et/ou par côté et un groupe de protection global bidirectionnel, qui contient les deux groupes de protection unidirectionnels et qui bénéficie d'un statut prioritaire par rapport aux deux groupes de protection unidirectionnels. Les groupes de protection unidirectionnels peuvent avoir des caractéristiques différentes, résultant en des schémas de commutations différents dans les directions d'émission et de réception.

A titre d'exemple de réalisation pratique et non limitatif du procédé selon l'invention, on décrira ci-après les propriétés et avantages d'une mise en oeuvre concrète de ce dernier en relation avec la figure 2 du dessin annexé, qui représente, de manière synoptique, un groupe de protection bidirectionnel comportant deux ressources actives et une ressource de protection dans chaque direction de transmission des signaux.

L'exemple représenté est basé sur la recommandation ITU-T G.774-3 qui modélise les schémas de protection au moyen de groupes de protection et d'unités de protection. Les fonctions de transmission sont indiquées au niveau des points ou bornes de connexion et les groupes et unités de protection selon l'invention sont mises en relation avec lesdit(e)s points ou bornes. Les objets et les principes décrits dans la recommandation précitée sont utilisés dans le cadre de la présente invention, pour autant qu'ils soient compatibles avec les principes de cette dernière.

Comme le montre la figure 2, trois groupes de protection sont créés en cas de trafic bidirectionnel, à savoir, un groupe de protection côté réception dont tous les points ou bornes de connexion sont réceptrices, un groupe de protection côté émission dont tous les points ou bornes de connexion sont émettrices et un groupe de protection bidirectionnel contenant les deux premiers.

Chacun des groupes de protection dédiés et unidirectionnels renferme des unités protectrices et des unités à protéger, chaque unité de protection étant en relation avec une ressource fiable et une ressource non fiable. La ressource fiable est celle dont le trafic peut être protégé. Cette dernière est nulle pour une unité de protection protégeant une ressource ou unité active.

Sur la figure 2, les pastilles circulaires pleines indiquent des points ou bornes de connexion par lesquel(le)s transite du trafic et les pastilles circulaires vides indiquent des points ou bornes de connexion por lequel(le)s ne transite aucun trafic. On notera également que la source TP (a) est associée au récepteur TP (a) pour un trafic bidirectionnel.

Avec l'implémentation représentée sur la figure 2, il est possible d'avoir une commutation de protection du côté émission, cette commutation étant effectuée par le groupe de protection affecté au côté émission, sans avoir une commutation de protection correspondante du côté réception.

S'il y a une défaillance du signal émis par la source TP (a), alors le signal peut être transmis par l'intermédiaire de la source TP (c) sans affecter les signaux reçus. Lorsque le signal reçu par le récepteur TP (b) est dégradé, il peut être reçu par l'intermédiaire du récepteur TP (c), puisque le signal reçu par le récepteur TP (a) n'a pas été commuté en direction du récepteur TP (c) lorsque le signal transmis par la source TP (a) a été commuté vers la source TP (c). Si cela avait eu lieu, alors le signal reçu par le récepteur TP (b) n'aurait pas pu être protégé.

Si un problème apparaît simultanément au niveau du signal reçu par le récepteur TP (a) et au niveau du signal émis par la source TP (a), alors une commutation bidirectionnelle est nécessaire et cette dernière sera mise en oeuvre par le groupe de protection bidirectionnel.

L'homme du métier relèvera qu'il en résulte une augmentation sensible de la fiabilité et de la sécurité de la transmission.

Le procédé de gestion selon l'invention permet également de combiner indifféremment des commutations de protection unidirectionnelles et bidirectionnelles.

Ainsi, en relation avec la figure 2 des dessins annexés, on notera qu'il est possible de réaliser, en même temps, d'une part une commutation de protection forcée du côté récepteur sur l'unité de protection (a) [effectuée par le groupe de protection côté réception] et, d'autre part, une commutation de verrouillage en protection bidirectionnelle sur l'unité de protection (b) du côté réception et émission [effectuée par le groupe de protection bidirectionnel].

Le procédé de gestion selon l'invention permet également de combiner les initialisations des attributs unidirectionnels et bidirectionnels.

En effet, la création de trois groupes de protection favorise la gestion séparée des caractéristiques de protection dans chaque direction de transmission. Ainsi, les groupes de protection côté réception et côté émission peuvent, par exemple, être verrouillés tous les deux en protection alors que l'un uniquement de ces deux groupes est réversible en protection.

La présente invention a également pour objet un réseau de télécommunication, en particulier un réseau de transmission WDM, comprenant des ressources actives, assurant la transmission et l'établissement et le maintien des communications en fonctionnement normal, et des ressources additionnelles de protection, normalement inactives et destinées à suppléer les ressources actives en cas de dysfonctionnement de ces dernières, caractérisé en ce qu'il gère l'affectation et met en oeuvre les ressources de protection en appliquant le procédé de gestion des ressources de protection tel que décrit précédemment.

Grâce à l'invention, il est donc possible de fournir un modèle d'information ou d'organisation, gérant l'attribution des ressources de protection et autorisant une décorrélation de la direction des commutateurs de protection, la combinaison de commutations de protection unidirectionnelles et bidirectionnelles et la combinaison de configurations de protection unidirectionnelles et bidirectionnelles.

Les standards et le langage suceptibles d'être utilisés pour la réalisation du modèle d'information ou d'organisation selon l'invention, et son intégration dans le système de gestion du réseau considéré, sont notamment indiqués dans la demande de brevet français précitée au nom de la demanderesse.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de gestion de ressources de protection dans un réseau de communication, permettant l'attribution de ressources de protection à des ressources actives et comprenant en particulier une étape d'établissement d'un modèle d'information ou d'organisation des ressources, composé de sélecteurs ou groupes de protection contrôlant la commutation entre ressources actives et ressources de protection, au moyen de bornes de connexion ou terminales, **caractérisé en ce que** ledit modèle d'information ou d'organisation comporte des groupes comprenant ou utilisant des ressources de protection associées à une direction de flux spécifique.

2. Procédé de gestion selon la revendication 1, dans lequel lesdites ressources comportent chacune un coté émission et un coté réception, **caractérisé en ce que** le modèle d'information ou d'organisation comprend un groupe de protection unidirectionnel dédié au côté réception et un groupe de protection unidirectionnel dédié au côté émission, chacun desdits groupes de protection unidirectionnel mettant en oeuvre des ressources de protection différenciées en commandant leur utilisations de manière mutuellement indépendante.

3. Procédé de gestion selon la revendication 2, **caractérisé en ce que** les deux groupes de protection unidirectionnels présentent chacun des caractéristiques et une configuration de commutations spécifiques et distinctes, toutes les bornes de connexion ou terminales du groupe de protection dédié au côté réception étant réceptrices et toutes les bornes de connexion ou terminales du groupe de protection dédié au côté émission étant émettrices.

4. Procédé de gestion selon l'une quelconque des revendications 2 et 3, **caractérisé en ce que** chacun des groupes de protection dédié et unidirectionnel renferme des unités de protection et des unités à protéger, chaque unité de protection étant en relation avec une ressource fiable et une ressource non fiable.

5. Procédé de gestion selon l'une quelconque des revendications 1 à 4, **caractérisé en ce que**, en cas de trafic bidirectionnel, le modèle d'information ou d'organisation est composé d'un groupe de protection unidirectionnel pour le côté réception, d'un groupe de protection unidirectionnel pour le côté émission ou source et d'un groupe de protection bidirectionnel comprenant les deux groupes de protection unidirectionnels précités.

6. Réseau de télécommunication, en particulier un réseau de transmission WDM, comprenant des ressources actives, assurant la transmission et l'établissement et le maintien des communications en fonctionnement normal, et des ressources additionnelles de protection, normalement inactives et destinées à suppléer les ressources actives en cas de dysfonctionnement de ces dernières, **caractérisé en ce qu'**il gère l'affectation et met en oeuvre les ressources de protection en applicant le procédé de gestion selon l'une quelconque des revendications 1 à 5.
